# EUROPEAN PATENT SPECIFICATION

(11) **EP 2 980 537 B1**
(45) Date of publication and mention of the grant of the patent: **06.06.2018**
(21) Application number: 15179029.2
(22) Date of filing: 30.07.2015
(51) Int. Cl.: G01D 5/26, G01D 5/353, G01M 11/00

(54) **MULTI-PEAK REFERENCE GRATING**
MEHRFACHSPITZEN-REFERENZGITTER
RÉSEAU DE RÉFÉRENCE MULTI-CRÊTES

(30) Priority: 30.07.2014 US 201414446543
(43) Date of publication of application: 03.02.2016
(73) Proprietor: Weatherford Technology Holdings, LLC, Houston Texas 77056 (US)
(72) Inventor: Taverner, Domino, Wallingford, CT 06492 (US)
(74) Representative: Talbot-Ponsonby, Daniel Frederick

(56) References cited:
- EP-A1- 2 696 182
- US-A1- 2010 128 348
- US-A1- 2011 249 973
- US-A1- 2012 050 735
- US-A1- 2014 112 361

## Description

Embodiments of the present invention generally relate to measuring optical wavelengths and, more particularly, to using a multi-peak reference grating as an optical reference element in an optical wavelength measurement system. US2014112361 discloses an optical wavelength sweeping apparatus. A fibre Bragg grating (FBG) is an optical element that is usually formed by photo-induced periodic modulation of the refractive index of an optical fiber's core. An FBG element is highly reflective to light having wavelengths within a narrow bandwidth that is centered at a wavelength that is referred to as the Bragg wavelength. Other wavelengths are passed through the FBG without reflection. The Bragg wavelength depends not only on characteristics of the optical fiber itself, but also on physical parameters (e.g., temperature and strain) that affect the refractive index. Therefore, FBG elements can be used as sensors to measure such parameters. After proper calibration, the Bragg wavelength provides an absolute measure of the physical parameters.
In practice, the Bragg wavelengths of one or more FBG elements are often measured by sweeping light across a wavelength range (i.e., a bandwidth) that includes all of the possible Bragg wavelengths for the FBG elements and by measuring the power (intensity) of the reflected light over time. While FBG elements are highly useful sensors, a typical application entails the Bragg wavelength being measured with a resolution, repeatability, and accuracy of about 1 picometre (pm). With a Bragg wavelength of 1.55 microns (µm), a shift of 1 pm corresponds to a change in temperature of approximately 0.1°C. Because of the desired accuracy of the Bragg wavelength determination, some type of reference wavelength measurement system is typically included. Making the problem of determining Bragg wavelengths more difficult is the fact that broadband sources and tunable filters are subject to gradients and ripples in the filtered light source spectrum that can induce small wavelength shifts in the measured peak wavelengths. This leads to uncertainties in the measured Bragg wavelength.
FBG sensor systems usually include a wavelength reference system to assist determining the Bragg wavelengths. Such reference systems are often based on a fixed cavity length interference filter, typically a fixed Fabry-Perot wavelength filter, and at least one reference FBG. When the wavelength swept light is input to the fixed cavity length interference filter the output of the filter is a pulse train that represents the fringes/peaks of the optical transmission, or of the reflection spectrum, of the filter, i.e., a comb spectrum having constant frequency spacing. This wavelength reference system reduces problems associated with non-linearity, drift and hysteresis. The reference FBG element can be used either for identification of one of the individual interference filter comb peaks, which is then used as the wavelength reference, or for relative wavelength measurements between FBG sensor elements and the reference FBG. Thus, the comb spectrum establishes a frequency/wavelength scale.

By calibrating both the comb peak wavelength spacing of the reference-fixed Fabry-Perot wavelength filter and the peak wavelength of the reference FBG versus temperature, and by accurately measuring the temperatures of the Fabry-Perot wavelength filter and of the reference FBG, the Bragg wavelengths of the FBGs sensors can be accurately determined. Alternatively, the temperatures of the fixed Fabry-Perot wavelength filter and of the reference FBG can be stabilized using an oven or an ice bath, for example.

Embodiments of the present invention generally relate to using a multi-peak reference grating as an optical reference element to produce an optical spectrum with a plurality of reference wavelength peaks. This multi-peak reference grating is suitable for use in swept-wavelength interrogation systems, such as those utilizing Bragg grating sensors.

In accordance with one aspect of the present invention there is provided an optical wavelength measurement system. The system generally includes an optical source for producing light swept over a range of wavelengths; one or more optical sensing elements, each having a characteristic wavelength within the range of wavelengths; an optical reference element configured to produce a plurality of wavelength peaks spaced over at least a portion of the range of wavelengths, wherein each of the wavelength peaks is pre-characterized for absolute wavelength over a range of environmental operating conditions for the optical reference element; a sensing detector for converting light received from the optical sensing elements into a sensor electrical signal; a reference detector for converting light received from the optical reference element into a reference electrical signal; and a processing system configured to determine the characteristic wavelengths of the optical sensing elements based on the sensor electrical signal and the reference electrical signal. For some embodiments, the optical reference element comprises a super-structured Bragg grating.

In accordance with another aspect of the present invention there is provided a method for determining characteristic wavelengths of one or more optical sensing elements. The method generally includes sweeping light over a range of wavelengths; introducing a first portion of the wavelength-swept light to the optical sensing elements, each having a characteristic wavelength within the range of wavelengths; introducing a second portion of the wavelength-swept light to an optical reference element to produce a plurality of wavelength peaks spaced over at least a portion of the range of wavelengths, wherein each of the wavelength peaks is pre-characterized for absolute wavelength over a range of environmental operating conditions for the optical reference element; converting light received from the optical sensing elements into a sensor electrical signal; converting light received from the optical reference element into a reference electrical signal; and determining characteristic wavelengths of the optical sensing elements based on the sensor electrical signal and the reference electrical signal. For some embodiments, the optical reference element comprises a super-structured Bragg grating.

Further aspects and preferred features are set out in claim 2 *et seq.*

So that the manner in which the above-recited features of the present invention can be understood in detail, a more particular description of the invention, briefly summarized above, may be had by reference to embodiments, some of which are illustrated in the appended drawings. It is to be noted, however, that the appended drawings illustrate only typical embodiments of this invention and are therefore not to be considered limiting of its scope, for the invention may admit to other equally effective embodiments.
FIG. 1 illustrates a prior art swept-wavelength Bragg grating interrogation system using a combination of a Fabry-Perot etalon and a reference Bragg grating to accurately determine the characteristic wavelengths of the Bragg grating sensors.
FIG. 2 illustrates a super-structured Bragg grating as an example multi-peak reference grating, in accordance with embodiments of the invention.
FIG. 3 is an example optical spectrum produced by an example multi-peak reference grating, in accordance with an embodiment of the invention.
FIG. 4 illustrates a swept-wavelength Bragg grating interrogation system using a multi-peak reference grating to accurately determine the characteristic wavelengths of the Bragg grating sensors, in accordance with an embodiment of the invention.
FIG. 5 is a flow diagram of example operations for determining characteristic wavelengths of one or more optical sensing elements using an optical reference element capable of producing a plurality of reference wavelength peaks, in accordance with an embodiment of the invention.

Embodiments of the present invention provide techniques and apparatus for using a multi-peak reference grating as an optical reference element to produce an optical spectrum with a plurality of reference wavelength peaks spanning a desired wavelength range. This multi-peak reference grating is suitable for use in swept-wavelength interrogation systems, such as those utilizing Bragg grating sensors. Each of the reference wavelength peaks may be characterized for absolute wavelength over a range of environmental operating conditions, such that the absolute wavelength of each reference wavelength peak can be found at any time given the contemporaneous environmental operating condition. This reference grating is interrogated concurrently with the Bragg grating sensors, and the position of each sensor peak relative to the reference grating peaks is used to calculate the absolute wavelength of each sensor (and hence, the corresponding parameter of interest).

### EXAMPLE CONVENTIONAL OPTICAL INTERROGATION SYSTEM

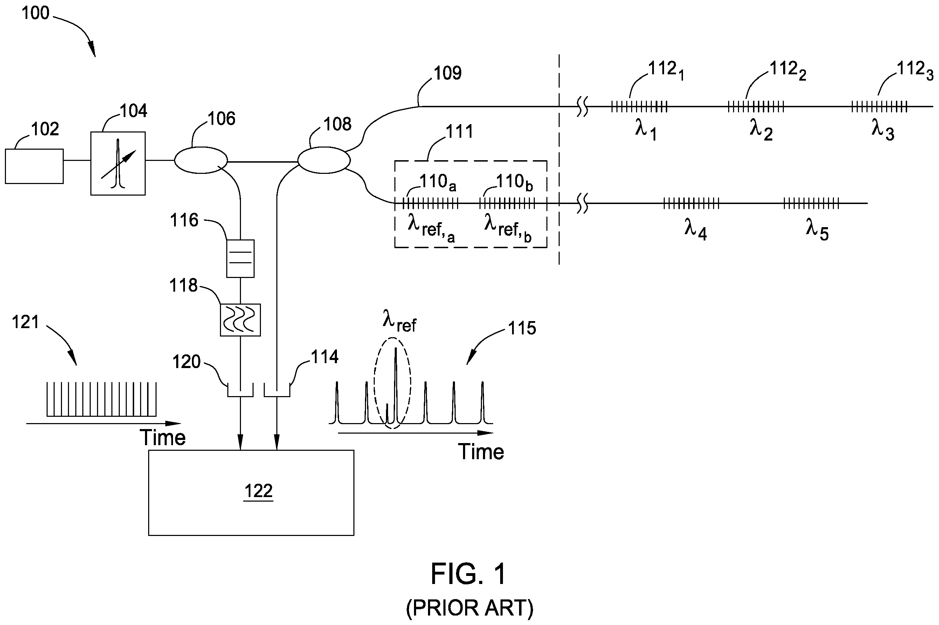

FIG. 1 illustrates a conventional swept-wavelength Bragg grating interrogation system 100, which uses a combination of a Fabry-Perot etalon and a separate optical reference element (e.g., a reference Bragg grating) to accurately determine the characteristic wavelengths of the optical sensing elements. Such a conventional system 100 is described in US Patent No. 7,109,471 to Taverner, filed June 4, 2004 and entitled "Optical Wavelength Determination Using Multiple Measurable Features". This optical interrogation system 100 is suitable for measuring pressure and/or temperature in hostile environments, such as occurs in wellbores for hydrocarbon production.

The system 100 may include a broadband light source 102 that emits broadband light and a piezoelectrically tunable fiber Fabry-Perot (F-P) filter 104 (e.g., a piezoelectric transducer (PZT) tunable fiber F-P filter [Kersey, A. D., Berkoff, T. A., and Morey, W. W., "Multiplexed Fiber Bragg Grating Strain-Sensor System with a Fiber Fabry-Perot Wavelength Filter," Optics Letters, Vol. 18, pp. 1370-1372, 1993]). The broadband light source 102 and the tunable fiber F-P filter 104 may act together to produce narrow bandwidth light that is scanned (i.e., swept) across a range of wavelengths. The range of wavelengths may most likely cover at least the Bragg wavelengths of the optical sensing elements 112. For some embodiments, the broadband light source 102 and filter 104 may be replaced by a tunable laser capable of emitting light swept over the desired range of wavelengths.

The narrow bandwidth scanning light from the tunable fiber F-P filter 104 may be split by a fiber optic directional coupler 106 (i.e., an optical splitter). A first portion of the distributed light is coupled to an optical reference element 110 and a plurality of optical sensing elements 112 via a second directional coupler 108 and optical fibers 109. The optical sensing elements 112 may comprise Bragg gratings (e.g., FBGs) that interact with light at multiple wavelengths within wavelength bands λ₁ through λ₅. Although only five optical sensing elements are shown, the sensing array may include any suitable number of wavelength-division multiplexed (WDM'ed) and/or time-division multiplexed (TDM'ed) sensing elements for a given application. The reference element 110 may comprise a gas cell or a Bragg grating (e.g., an FBG or a grating written in a cane waveguide) that interacts with light at multiple wavelengths within a reference wavelength band λref.

Light reflections from the optical sensing elements 112 and from the reference element 110-which occur when the wavelength of the narrow bandwidth scanning light sweeps across the Bragg wavelength of a sensing element 112 or of the reference element 110-passes back into the directional coupler 108 and onto a sensor receiver 114, such as a photodetector. The sensor receiver 114 converts the Bragg wavelength reflections (e.g., having the example optical sensor spectrum 115 shown in FIG. 1) into sensor electrical signals having amplitudes that depend on the power (intensity) of the reflected light. Thus, the sensor receiver 114 acts as a power meter.

A second portion of the light from the tunable fiber F-P filter 104 may be directed by the fiber optic directional coupler 106 into a reference branch having F-P etalon 116 and an optical filter 118. The F-P etalon 116 produces an optical reference spectrum having spectrum peaks with a constant, known wavelength separation that depends on the spacing in the etalon 116, which may be referred to as "reference comb peaks." The optical filter 118 may be a bandpass filter used to filter out spectrum peaks outside the wavelength range of interest. The output of the filter 118 is coupled to a reference receiver 120 (e.g., a photodetector), which produces a reference electrical signal from the filtered reference spectrum 121.

The electrical signals from the sensor receiver 114 and from the reference receiver 120 are sampled, processed, and compared in a signal processing unit 122 to determine the characteristic wavelengths of the optical sensing elements 112. The unit 122 processes the sensor electrical pulse train to isolate the response from the optical reference element 110 (which has a different wavelength band λref than the wavelength bands λ1 through λ5 of the sensing elements 112). This response is then processed to produce a characteristic wavelength of the reference element 110. That characteristic wavelength is then used to identify at least one reference peak in the optical sensor spectrum 115, which together with the known reference peak spacing from the reference spectrum 121, is used to determine the characteristic wavelengths corresponding to the wavelength bands λ1 through λ5.

The optical reference element 110 may be physically and thermally protected by an enclosure 111 as conceptually shown in FIG. 1. The enclosure 111 is configured to isolate the reference element 110 such that its characteristic wavelength is not susceptible to external influences. Alternatively, a thermometer may be used to determine the temperature of the reference element 110. Then, based on the measured temperature the characteristic wavelength of the reference element 110 may be compensated for temperature. Either way, the reference element 110 produces a characteristic wavelength that can be determined absolutely and used to process signals from the optical sensing elements 112 in the sensing array.

A key to accurately determining characteristic Bragg wavelengths is accurately determining the position of each element 110, 112 in the measured signal sweep, which can then be related to wavelength through use of the reference signal. The signal processing unit 122 uses the well-characterized reference peak to determine the Bragg wavelengths of the optical sensing elements 112 in the wavelength bands λ1 through λ5. Once the deviations in the Bragg wavelengths from their calibrated wavelengths are known, one or more physical parameters of interest can be found (e.g., temperature or pressure proximate the optical sensing elements 112).

However, the conventional swept-wavelength Bragg grating interrogation system 100 of FIG. 1 employs both an optical reference element 110 and a Fabry-Perot etalon 116 functioning as a wavelength ruler to determine absolute characteristic wavelengths of the optical sensing elements 112. The Fabry-Perot etalon 116 is complex and these components may occupy space unnecessarily. Furthermore, accuracy may suffer with only a single reference peak. Accordingly, what is needed is a simpler, more compact, and more accurate optical interrogation system.

### EXAMPLE OPTICAL INTERROGATION SYSTEM WITH A MULTI-PEAK REFERENCE GRATING

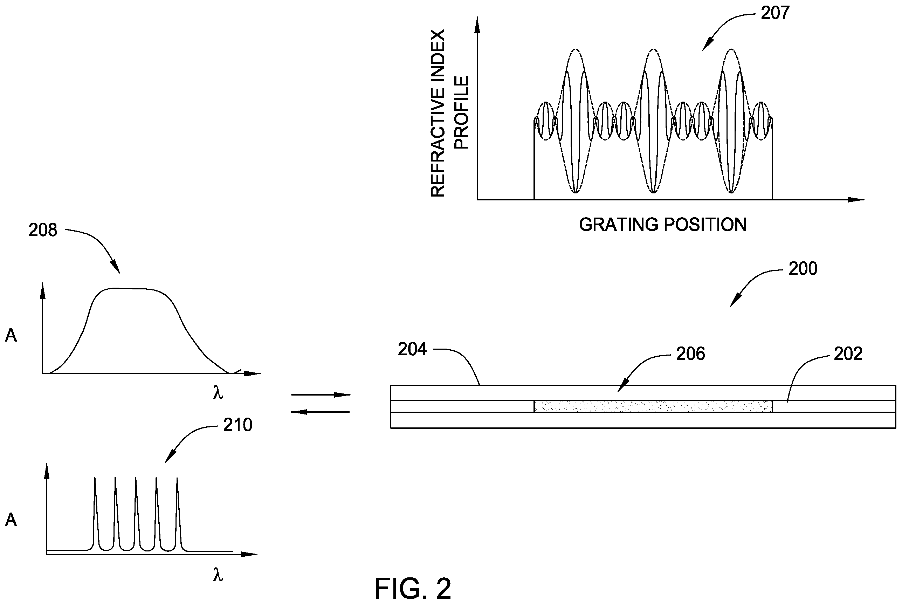

Rather than using a Fabry-Perot etalon 116 and a separate reference element 110 as in FIG. 1, embodiments of the invention replace this combination with a multi-peak reference grating. One suitable example of a multi-peak reference grating is a super-structured Bragg grating 200 as illustrated in FIG. 2.

The super-structured Bragg grating 200 is a Bragg grating with a complex structure 206 that may include modulation of the amplitude, period, and/or phase of the refractive index (in the core 202 of the optical waveguide) on length scales greater than the underlying Bragg period. An example complex refractive index profile 207 for the super-structured Bragg grating 200 is also illustrated in FIG. 2. The profile 207 is similar to the periodic sinc modulation of the refractive index profile in FBGs described in Ibsen, M. et al., "Sinc-Sampled Fiber Bragg Gratings for Identical Multiple Wavelength Operation," IEEE Photonics Technology Letters, Vol. 10, No. 6, June 1998, pp. 842-843.

The optical waveguide of the grating 200 may be an optical fiber or a large diameter optical waveguide. As used herein, a large diameter optical waveguide (also referred to as a "cane" waveguide due to its relatively rigid nature compared to an optical fiber) generally refers to a waveguide where the outer diameter of the cladding 204 is at least 0.3 mm. When light having an input optical spectrum 208 (plotted as amplitude versus wavelength) is applied to the grating 200, a multi-component output 210 is produced by reflections of light at multiple Bragg wavelengths. Alternatively, the multi-component output 210 may also be produced by multiple Bragg elements, which may be co-located.

The characteristic wavelength of each peak in the super-structured Bragg grating spectrum is very stable with time (i.e., exhibits low long-term drift). Furthermore, the gratings do not exhibit hysteresis with temperature or pressure cycles. Thus, the spectral peaks of the super-structured Bragg grating 200 may be sufficiently characterized to determine absolute wavelengths for a range of operating environmental conditions, as described below.

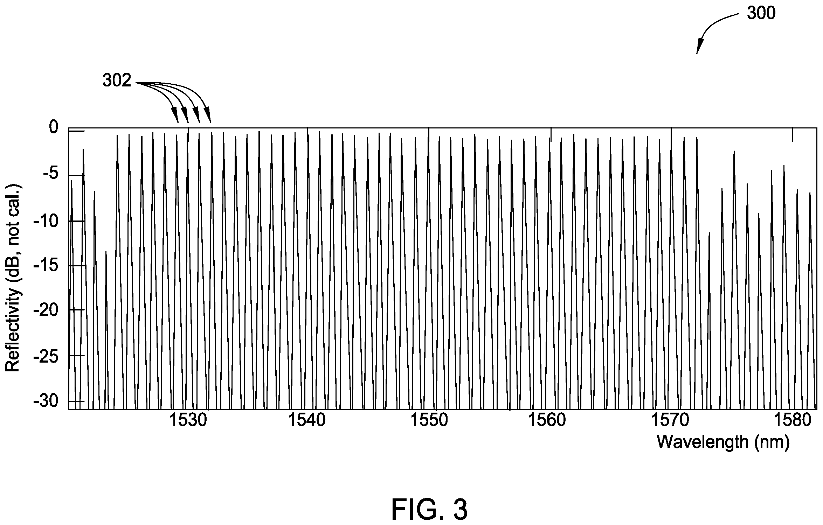

FIG. 3 is an example output optical spectrum 300 produced by reflections of light input to an example multi-peak reference grating, in accordance with an embodiment of the invention. As shown in the optical spectrum 300, the reference wavelength peaks 302 may range from at least 1524 to 1572 nm, for example. For other embodiments, this range may be extended to reference wavelength peaks of at least 1610 nm. For some embodiments, the reference wavelength peaks may be uniformly spaced over a desired range of wavelengths, as depicted in FIG. 3. For other embodiments, the reference peaks need not be uniformly spaced.

Each of the reference wavelength peaks produced by the multi-peak reference grating may be individually characterized for absolute wavelength over a range of environmental operating conditions (e.g., temperature) before operation. This pre-characterization may be performed by a calibrated optical wave-meter, for example. In this manner, the absolute wavelength of each reference wavelength peak may be determined at any time given the current environmental operating conditions.

This optical spectrum 300 functions as a wavelength ruler, similar to the reference spectrum 121 of FIG. 1. However, this spectrum 300 also includes multiple well-characterized, low drift reference wavelength peaks as described above, so the multi-peak reference grating can replace the combination of the Fabry-Perot etalon 116 and the separate reference element 110.

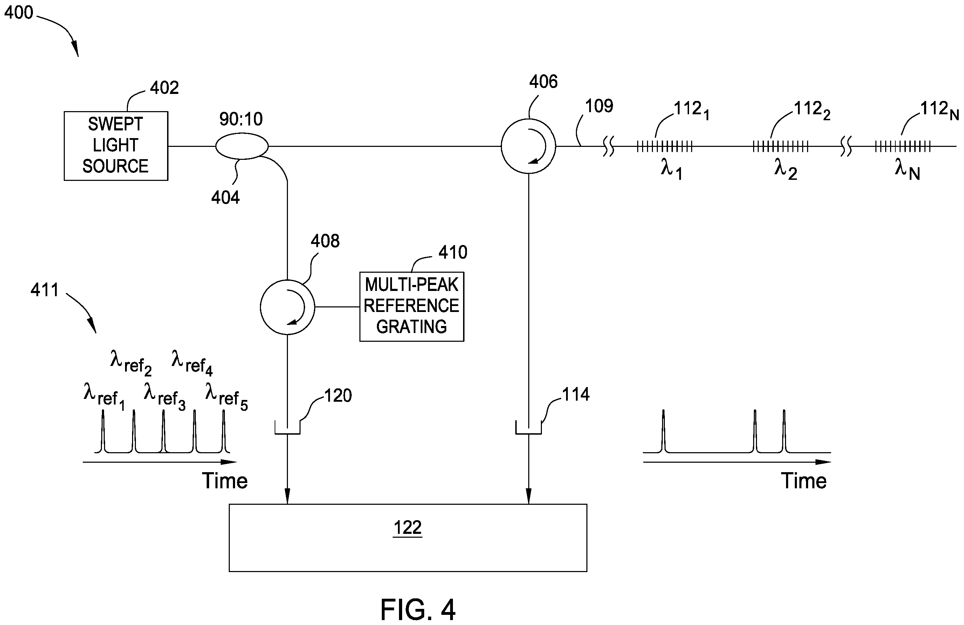

FIG. 4 illustrates a swept-wavelength Bragg grating interrogation system 400 using a multi-peak reference grating 410 to accurately determine the characteristic wavelengths of the Bragg grating sensors, in accordance with an embodiment of the invention. The system 400 may include a wavelength-swept light source 402 that outputs narrow bandwidth light that is scanned (i.e., swept) across a range of wavelengths. The range of wavelengths may most likely cover at least the Bragg wavelengths of the optical sensing elements 112. For some embodiments, the light source 402 may be a tunable laser capable of emitting light swept over the desired range of wavelengths.

The narrow bandwidth scanning light produced by the light source 402 may be split by a fiber optic directional coupler 404 (i.e., an optical splitter). A first portion (e.g., 90% in a 90:10 splitter) of the light may be optically coupled to a plurality of optical sensing elements 112 via a first optical circulator 406 and optical fibers 109. The optical sensing elements 112 may comprise Bragg gratings (e.g., FBGs) that interact with light at multiple wavelengths within narrow wavelength bands λ₁ through λ_{N}. Although only three optical sensing elements are shown, the sensing array may include any suitable number of wavelength-division multiplexed (WDM'ed) and/or time-division multiplexed (TDM'ed) sensing elements for a given application.

Light reflections from the optical sensing elements 112-which occur when the wavelength of the narrow bandwidth scanning light sweeps across the Bragg wavelength of a sensing element 112-passes back into the first optical circulator 406 and onto the sensor receiver 114, such as a photodetector. The sensor receiver 114 converts the Bragg wavelength reflections into sensor electrical signals having amplitudes that depend on the power (intensity) of the reflected light.

A second portion (e.g., 10% in a 90:10 splitter) of the light from the light source 402 may be directed by the fiber optic directional coupler 404 into a reference branch having a second optical circulator 408 and the multi-peak reference grating 410. This interrogation of the reference branch may occur concurrently with the interrogation of the sensing branch having the optical sensing elements 112. Wavelength-swept light directed into the second optical circulator 408 may be input into and reflected by the multi-peak reference grating 410 to produce an optical reference spectrum 411 having multiple reference wavelength peaks (λref1 through λ_{ref5} are shown as an example, although optical spectrum 300 is more representative of a typical application). The range of reference wavelength peaks may cover the entire operating range (e.g., for all possible characteristic wavelengths of the optical sensing elements 112, over all potential environmental operating conditions). This is different from the F-P etalon 116 of FIG. 16, where light (although reflected several times within the etalon) is eventually transmitted through (not reflected by) the etalon as shown in FIG. 1. Returning to FIG. 4, light reflected from the multi-peak reference grating 410 is then directed by the second optical circulator 408 to the reference receiver 120 (e.g., a photodetector), which produces a reference electrical signal from the optical reference spectrum 411.

For some embodiments, the multi-peak reference grating 410 may be a large-diameter optical waveguide. In this case, only one end of the multi-peak reference grating 410 may be held, such that the grating 410 is not affected by strain. For other embodiments, the multi-peak reference grating 410 may be disposed in a strain-free mount.

The electrical signals from the sensor receiver 114 and from the reference receiver 120 are sampled, processed, and compared in a signal processing unit 122 to determine the characteristic wavelengths of the optical sensing elements 112. The unit 122 processes each peak in the sensor electrical pulse train to determine its absolute characteristic wavelength. This may be accomplished by comparing each peak in the sensor electrical pulse train to the peaks in the reference electrical pulse train. The relative time of the sensor peak between neighboring reference peaks will be used to determine a time value (e.g., a ratio) for the sensor peak. This determination may be made based on a ratio if the wavelength sweep is linear or on a best-fit analysis (e.g., regression) if the wavelength sweep is nonlinear. By measuring the environmental operating conditions of the multi-peak reference grating 410 during the sweep, the absolute wavelengths of the neighboring reference peaks may be calculated. Then, the time value for the sensor peak and the absolute wavelengths of the neighboring reference peaks may be used to accurately calculate the absolute wavelength of the sensor peak.

### OPERATING AN OPTICAL SENSING SYSTEM WITH A MULTI-PEAK REFERENCE GRATING

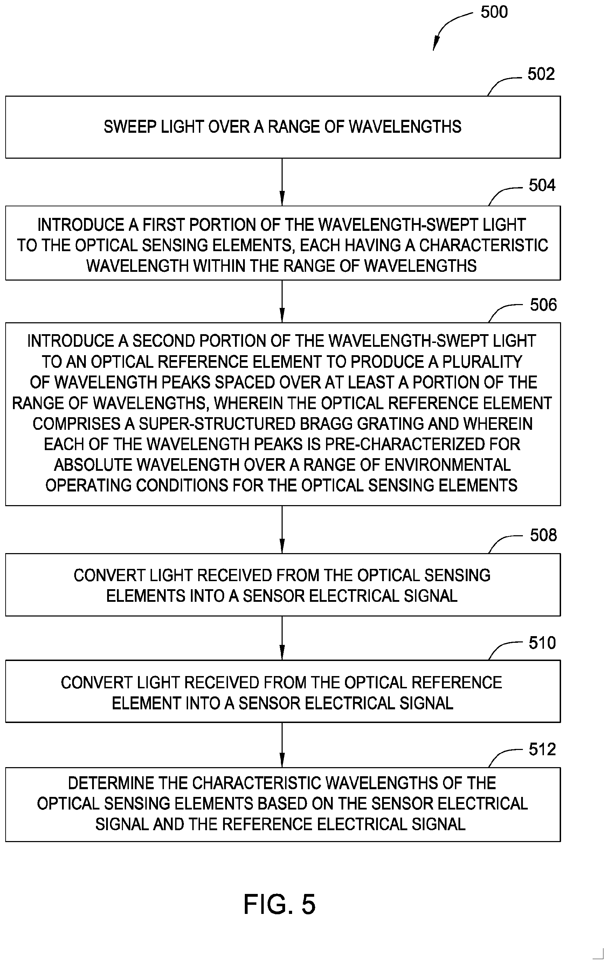

FIG. 5 is a flow diagram of example operations 500 for determining characteristic wavelengths of one or more optical sensing elements, in accordance with an embodiment of the invention. The operations 500 may be performed by an optical sensing system, such as the swept-wavelength interrogation system 400 of FIG. 4.

The operations 500 may begin, at 502, by sweeping light over a range of wavelengths. According to some embodiments, sweeping the light over the range of wavelengths at 502 involves tuning a broadband light source using a tunable optical filter with a narrow wavelength passband. For other embodiments, sweeping the light over the range of wavelengths at 502 involves using a tunable laser.

At 504, a first portion of the wavelength-swept light may be introduced to the optical sensing elements, each having a characteristic wavelength within the range of wavelengths. For example, the optical sensing elements may be reflective sensing elements, such as Bragg gratings (e.g., FBGs).

At 506, a second portion of the wavelength-swept light may be introduced to an optical reference element to produce a plurality of wavelength peaks spaced over at least a portion of the range of wavelengths. The optical reference element may be a super-structured Bragg grating. Each of the wavelength peaks may be pre-characterized for absolute wavelength over a range of environmental operating conditions for the optical reference element. The plurality of wavelength peaks may be uniformly spaced over the at least the portion of the range of wavelengths. For some embodiments, the super-structured Bragg grating is composed of a large diameter optical waveguide having a cladding surrounding a core, wherein an outer diameter of the cladding is at least 0.3 mm. The environmental operating conditions typically includes temperature.

According to some embodiments, the characteristic wavelengths of the optical sensing elements are within a subset of the range of wavelengths. In this case, the optical reference element may be configured to produce the plurality of wavelength peaks spaced over at least the subset of the range of wavelengths. For other embodiments, the optical reference element may be configured to produce the plurality of wavelength peaks spaced over (at least) the range of wavelengths.

According to some embodiments, the at least the portion of the range of wavelengths ranges from 1524 nm to 1572 nm, for example. As another example, the at least the portion of the range of wavelengths ranges from 1524 nm to 1610 nm.

According to some embodiments, the first portion of the wavelength-swept light has a greater optical intensity than the second portion. For example, a 90:10 optical splitter may be used to generate the first and second portions, respectively, such that 90% of the input optical power of the wavelength-swept light is distributed to the first portion and 10% of the input optical power is allocated for the second portion.

At 508, light received from the optical sensing elements may be converted into a sensor electrical signal. This conversion may be accomplished using a photodetector. At 510, light received from the optical reference element may be converted into a reference electrical signal. At 512, the characteristic wavelengths of the optical sensing elements may be determined based on the received sensor electrical signal and the received reference electrical signal.

According to some embodiments, the characteristic wavelengths may be determined at 512 by determining a characteristic wavelength for one of the optical sensing elements. This determination may involve determining a relative time of a sensor peak in the sensor electrical signal corresponding to the one of the optical sensing elements; determining a relative time of a first reference peak occurring in the reference electrical signal before the sensor peak; determining a relative time of a second reference peak occurring in the reference electrical signal after the sensor peak; determining a first absolute wavelength corresponding to the first wavelength peak; determining a second absolute wavelength corresponding to the second wavelength peak; and calculating the characteristic wavelength for the one of the optical sensing elements based on the first absolute wavelength, the second absolute wavelength, and the relative time of the sensor peak with respect to at least one of the first or second reference peak. In this case, the operations 500 may further include determining a current environmental operating condition (e.g., of the optical reference element). The determination of the first and second absolute wavelengths may be based on the current environmental operating condition and the pre-characterization for each of the wavelength peaks of the optical reference element.

Any of the operations described above, such as the operations 500, may be included as instructions in a computer-readable medium for execution by a surface controller for controlling the wavelength sweep (i.e., a wavelength sweep controller), the signal processing unit 122, and/or any other processing system. The computer-readable medium may comprise any suitable memory or other storage device for storing instructions, such as read-only memory (ROM), random access memory (RAM), flash memory, an electrically erasable programmable ROM (EEPROM), a compact disc ROM (CD-ROM), or a floppy disk.

Embodiments of the invention have a number of advantages over conventional solutions. Utilizing a multi-peak reference grating combines the functionality of several devices into one monolithic glass element. The characteristic wavelengths of the Bragg gratings in glass waveguides (e.g., fiber or cane) are extremely repeatable with environmental cycling (e.g., temperature cycling) and can be very well characterized, with no observable hysteresis, unlike reference systems based on Fabry-Perot etalons. Furthermore, the long-term drift of certain properties (e.g., wavelength and peak spacing) of some reference elements has been a problem. With proper annealing, mounting, and protection, Bragg gratings in glass waveguides can be extremely stable over the lifetime of the system with negligible long-term drift. Embodiments of the present invention provide a simpler, more accurate, and smaller solution than conventional optical sensing systems, providing a compact package with very low hysteresis and long-term drift.

While the foregoing is directed to embodiments of the present invention, other and further embodiments of the invention may be devised without departing from the basic scope thereof, and the scope thereof is determined by the claims that follow.

## Claims

1. An optical wavelength measurement system (400), comprising:
an optical source (402) for producing light swept over a range of wavelengths;
one or more optical sensing elements (112), each of the optical sensing elements having a characteristic wavelength within the range of wavelengths;
an optical reference element (410) configured to produce a plurality of wavelength peaks (302) spaced over at least a portion of the range of wavelengths, wherein each of the wavelength peaks is pre-characterized for absolute wavelength over a range of environmental operating conditions for the optical reference element;
a sensing detector (114) for converting light received from the optical sensing elements (112) into a sensor electrical signal;
a reference detector (120) for converting light received from the optical reference element (410) into a reference electrical signal; and
a processing system (122) configured to determine the one or more characteristic wavelengths of the optical sensing elements (112) based on the sensor electrical signal, the reference electrical signal, and a current environmental operating condition within said range of environmental operating conditions.

2. The system of claim 1, wherein:
the optical reference element (410) comprises a super-structured Bragg grating (200);
the super-structured Bragg grating comprises a large diameter optical waveguide having a cladding (204) surrounding a core (202);
an outer diameter of the cladding is at least 0.3 mm; and
the large diameter optical waveguide is mounted at only one end such that the large diameter optical waveguide is strain free.

3. The system of claim 1 or 2, wherein the plurality of wavelength peaks (302) are uniformly spaced over the at least the portion of the range of wavelengths.

4. The system of claim 1, 2 or 3, wherein the optical sensing elements (112) have characteristic wavelengths within a subset of the range of wavelengths and wherein the optical reference element (410) is configured to produce the plurality of wavelength peaks spaced over at least the subset of the range of wavelengths.

5. The system of claim 1, 2 or 3, wherein the optical reference element (410) is configured to produce the plurality of wavelength peaks (302) spaced over the range of wavelengths.

6. The system of any preceding claim, wherein the processing system (122) is configured to determine the characteristic wavelength for one of the optical sensing elements (112) by:
determining a relative time of a sensor peak in the sensor electrical signal corresponding to the one of the optical sensing elements;
determining a relative time of a first reference peak occurring in the reference electrical signal before the sensor peak;
determining a relative time of a second reference peak occurring in the reference electrical signal after the sensor peak;
determining a first absolute wavelength corresponding to the first wavelength peak;
determining a second absolute wavelength corresponding to the second wavelength peak; and
calculating the characteristic wavelength for the one of the optical sensing elements based on the first absolute wavelength, the second absolute wavelength, and the relative time of the sensor peak with respect to at least one of the first or second reference peak.

7. The system of claim 6, further comprising an environmental sensor configured to determine the current environmental operating condition, wherein the processing system (122) is configured to determine the first and second absolute wavelengths based on the current environmental operating condition and the pre-characterization for each of the wavelength peaks (302) of the optical reference element (410).

8. The system of any preceding claim, further comprising:
an optical splitter (404) for dividing the wavelength-swept light into a first portion and a second portion, wherein the first portion has a greater optical intensity than the second portion;
a first optical circulator (406) configured to send the first portion of the wavelength-swept light to the optical sensing elements; and
a second optical circulator (408) configured to send the second portion of the wavelength-swept light to the optical reference element (410), wherein the first optical circulator (406) is further configured to send the light received from the optical sensing elements (112) to the sensing detector (114) and wherein the second optical circulator is further configured to send the light received from the optical reference element to the reference detector (120).

9. The system of any preceding claim, wherein the at least the portion of the range of wavelengths comprises 1524 nm to 1572 nm.

10. A method for determining characteristic wavelengths of one or more optical sensing elements (112), comprising:
sweeping (502) light over a range of wavelengths;
introducing (504) a first portion of the wavelength-swept light to the optical sensing elements, each of the optical sensing elements having a characteristic wavelength within the range of wavelengths;
introducing (506) a second portion of the wavelength-swept light to an optical reference element (410) to produce a plurality of wavelength peaks (302) spaced over at least a portion of the range of wavelengths, wherein each of the wavelength peaks is pre-characterized for absolute wavelength over a range of environmental operating conditions for the optical reference element;
converting (508) light received from the optical sensing elements into a sensor electrical signal;
converting (510) light received from the optical reference element into a reference electrical signal; and
determining (512) the one or more characteristic wavelengths of the optical sensing elements based on the sensor electrical signal, the reference electrical signal, and a current environmental operating condition within said range of environmental operating conditions.

11. The method of claim 10, wherein:
the optical reference element (410) comprises a super-structured Bragg grating (200);
the super-structured Bragg grating comprises a large diameter optical waveguide having a cladding (204) surrounding a core (202); and
an outer diameter of the cladding is at least 0.3 mm.

12. The method of claim 10 or 11, wherein the characteristic wavelengths of the optical sensing elements are within a subset of the range of wavelengths and wherein the optical reference element (410) is configured to produce the plurality of wavelength peaks (302) spaced over at least the subset of the range of wavelengths.

13. The method of claim 10 or 11, wherein the optical reference element (410) is configured to produce the plurality of wavelength peaks (302) spaced over the range of wavelengths.

14. The method of any of claims 10 to 13, wherein determining the characteristic wavelengths for the optical sensing elements (112) comprises determining a characteristic wavelength for one of the optical sensing elements by:
determining a relative time of a sensor peak in the sensor electrical signal corresponding to the one of the optical sensing elements;
determining a relative time of a first reference peak occurring in the reference electrical signal before the sensor peak;
determining a relative time of a second reference peak occurring in the reference electrical signal after the sensor peak;
determining a first absolute wavelength corresponding to the first wavelength peak;
determining a second absolute wavelength corresponding to the second wavelength peak;
calculating the characteristic wavelength for the one of the optical sensing elements based on the first absolute wavelength, the second absolute wavelength, and the relative time of the sensor peak with respect to at least one of the first or second reference peak; and
determining the current environmental operating condition, wherein determining the first absolute wavelength and determining the second absolute wavelength are based on the current environmental operating condition and the pre-characterization for each of the wavelength peaks of the optical reference element (410).

15. The method of any of claims 10 to 14, wherein the first portion of the wavelength-swept light has a greater optical intensity than the second portion.

## Patentansprüche

1. Optisches Wellenlängenmesssystem (400), das Folgendes umfasst:
eine optische Quelle (402) zum Produzieren von Licht, das über einen Bereich von Wellenlängen gefegt wird;
ein oder mehrere optische Erfassungselemente (112), wobei jedes der optischen Erfassungselemente eine charakteristische Wellenlänge innerhalb des Wellenlängenbereichs hat;
ein optisches Referenzelement (410), konfiguriert zum Produzieren von mehreren Wellenlängenspitzen (302), die über wenigstens einen Abschnitt des Wellenlängenbereichs verteilt sind, wobei jede der Wellenlängenspitzen für eine absolute Wellenlänge über einen Bereich von Umgebungsbetriebsbedingungen für das optische Referenzelement vorcharakterisiert ist;
einen Erfassungsdetektor (114) zum Umwandeln von von den optischen Erfassungselementen (112) empfangenem Licht in ein elektrisches Sensorsignal;
einen Referenzdetektor (120) zum Umwandeln von von dem optischen Referenzelement (410) empfangenem Licht in ein elektrisches Referenzsignal; und
ein Verarbeitungssystem (122), konfiguriert zum Bestimmen der ein oder mehreren charakteristischen Wellenlängen der optischen Erfassungselemente (112) auf der Basis des elektrischen Sensorsignals, des elektrischen Referenzsignals und einer aktuellen Umgebungsbetriebsbedingung innerhalb des Bereichs von Umgebungsbetriebsbedingungen.

2. System nach Anspruch 1, wobei:
das optische Referenzelement (410) ein superstrukturiertes Bragg-Gitter (200) hat;
das superstrukturierte Bragg-Gitter einen optischen Wellenleiter mit großem Durchmesser mit einem Mantel (204) um einen Kern (202) umfasst;
ein Außendurchmesser des Mantels wenigstens 0,3 mm beträgt; und
der optische Wellenleiter mit großem Durchmesser nur an einem Ende montiert ist, so dass der optische Wellenleiter mit großem Durchmesser dehnungsfrei ist.

3. System nach Anspruch 1 oder 2, wobei die mehreren Wellenlängenspitzen (302) gleichmäßig über wenigstens den Abschnitt des Wellenlängenbereichs verteilt sind.

4. System nach Anspruch 1, 2 oder 3, wobei die optischen Erfassungselemente (112) charakteristische Wellenlängen innerhalb eines Teilsatzes des Wellenlängenbereichs haben und wobei das optische Referenzelement (410) zum Produzieren der mehreren Wellenlängenspitzen konfiguriert ist, die über wenigstens den Teilsatz des Wellenlängenbereichs verteilt sind.

5. System nach Anspruch 1, 2 oder 3, wobei das optische Referenzelement (410) zum Produzieren der mehreren Wellenlängenspitzen (302) konfiguriert ist, die über den Wellenlängenbereich verteilt sind.

6. System nach einem vorherigen Anspruch, wobei das Verarbeitungssystem (122) zum Bestimmen der charakteristischen Wellenlänge für eines der optischen Erfassungselemente (112) konfiguriert ist durch:
Bestimmen einer relativen Zeit einer Sensorspitze im elektrischen Sensorsignal entsprechend dem einen der optischen Erfassungselemente;
Bestimmen einer relativen Zeit einer ersten Referenzspitze, die in dem elektrischen Referenzsignal vor der Sensorspitze auftritt;
Bestimmen einer relativen Zeit einer zweiten Referenzspitze, die in dem elektrischen Referenzsignal nach der Sensorspitze auftritt;
Bestimmen einer ersten absoluten Wellenlänge entsprechend der ersten Wellenlängenspitze;
Bestimmen einer zweiten absoluten Wellenlänge entsprechend der zweiten Wellenlängenspitze; und
Berechnen der charakteristischen Wellenlänge für das eine der optischen Erfassungselemente auf der Basis der ersten absoluten Wellenlänge, der zweiten absoluten Wellenlänge und der relativen Zeit der Sensorspitze mit Bezug auf die wenigstens eine aus erster und zweiter Referenzspitze.

7. System nach Anspruch 6, das ferner einen Umgebungssensor umfasst, konfiguriert zum Bestimmen der aktuellen Umgebungsbetriebsbedingung, wobei das Verarbeitungssystem (122) zum Bestimmen der ersten und zweiten absoluten Wellenlängen auf der Basis der aktuellen Umgebungsbetriebsbedingung und der Vorcharakterisierung für jede der Wellenlängenspitzen (302) des optischen Referenzelements (410) konfiguriert ist.

8. System nach einem vorherigen Anspruch, das ferner Folgendes umfasst:
einen optischen Teiler (404) zum Unterteilen des wellenlängengefegten Lichts in einen ersten Abschnitt und einen zweiten Abschnitt, wobei der erste Abschnitt eine größere optische Intensität hat als der zweite Abschnitt;
einen ersten optischen Zirkulator (406), konfiguriert zum Senden des ersten Abschnitts des wellenlängengefegten Lichts zu den optischen Erfassungselementen; und
einen zweiten optischen Zirkulator (408), konfiguriert zum Senden des zweiten Abschnitts des wellenlängengefegten Lichts zu dem optischen Referenzelement (410), wobei der erste optische Zirkulator (406) ferner zum Senden des von den optischen Erfassungselementen (112) empfangenen Lichts zum Erfassungsdetektor (114) konfiguriert ist und wobei der zweite optische Zirkulator ferner zum Senden des von dem optischen Referenzelement empfangenen Lichts zum Referenzdetektor (120) konfiguriert ist.

9. System nach einem vorherigen Anspruch, wobei der wenigstens Abschnitt des Wellenlängenbereichs 1524 nm bis 1572 nm umfasst.

10. Verfahren zum Bestimmen von charakteristischen Wellenlängen von einem oder mehreren optischen Erfassungselementen (112), das Folgendes beinhaltet:
Fegen (502) von Licht über einen Bereich von Wellenlängen;
Einleiten (504) eines ersten Abschnitts des wellenlängengefegten Lichts zu den optischen Erfassungselementen, wobei jedes der optischen Erfassungselemente eine charakteristische Wellenlänge innerhalb des Bereichs von Wellenlängen hat;
Einleiten (506) eines zweiten Abschnitts des wellenlängengefegten Lichts zu einem optischen Referenzelement (410) zum Produzieren von mehreren Wellenlängenspitzen (302), die über wenigstens einen Abschnitt des Wellenlängenbereichs verteilt sind, wobei jede der Wellenlängenspitzen für absolute Wellenlängen über einen Bereich von Umgebungsbetriebsbedingungen für das optische Referenzelement vorcharakterisiert ist;
Umwandeln (508) von von den optischen Erfassungselementen empfangenem Licht in ein elektrisches Sensorsignal;
Umwandeln (510) von von dem optischen Referenzelement empfangenem Licht in ein elektrisches Referenzsignal; und
Bestimmen (512) der ein oder mehreren charakteristischen Wellenlängen der optischen Erfassungselemente auf der Basis des elektrischen Sensorsignals, des elektrischen Referenzsignals und einer aktuellen Umgebungsbetriebsbedingung innerhalb des Bereichs von Umgebungsbetriebsbedingungen.

11. Verfahren nach Anspruch 10, wobei:
das optische Referenzelement (410) ein superstrukturiertes Bragg-Gitter (200) umfasst;
das superstrukturierte Bragg-Gitter einen optischen Wellenleiter mit großem Durchmesser mit einem Mantel (204) um einen Kern (202) umfasst; und
ein Außendurchmesser des Mantels wenigstens 0,3 mm beträgt.

12. Verfahren nach Anspruch 10 oder 11, wobei die charakteristischen Wellenlängen der optischen Erfassungselemente innerhalb eines Teilsatzes des Wellenlängenbereichs liegen und wobei das optische Referenzelement (410) zum Produzieren der mehreren Wellenlängenspitzen (302) konfiguriert ist, die über wenigstens den Teilsatz des Wellenlängenbereichs verteilt sind.

13. Verfahren nach Anspruch 10 oder 11, wobei das optische Referenzelement (410) zum Produzieren der mehreren Wellenlängenspitzen (302) konfiguriert ist, die über den Wellenlängenbereich verteilt sind.

14. Verfahren nach einem der Ansprüche 10 bis 13, wobei das Bestimmen der charakteristischen Wellenlängen für die optischen Erfassungselemente (112) das Bestimmen einer charakteristischen Wellenlänge für eines der optischen Erfassungselemente umfasst durch:
Bestimmen einer relativen Zeit einer Sensorspitze des elektrischen Sensorsignals entsprechend dem einen der optischen Erfassungselemente;
Bestimmen einer relativen Zeit einer ersten Referenzspitze, die in dem elektrischen Referenzsignal vor der Sensorspitze auftritt;
Bestimmen einer relativen Zeit einer zweiten Referenzspitze, die in dem elektrischen Referenzsignal nach der Sensorspitze auftritt;
Bestimmen einer ersten absoluten Wellenlänge entsprechend der ersten Wellenlängenspitze;
Bestimmen einer zweiten absoluten Wellenlänge entsprechend der zweiten Wellenlängenspitze;
Berechnen der charakteristischen Wellenlänge für das eine der optischen Erfassungselemente auf der Basis der ersten absoluten Wellenlänge, der zweiten absoluten Wellenlänge und der relativen Zeit der Sensorspitze mit Bezug auf die wenigstens eine aus erster oder zweiter Referenzspitze; und
Bestimmen der aktuellen Umgebungsbetriebsbedingung, wobei das Bestimmen der ersten absoluten Wellenlänge und das Bestimmen der zweiten absoluten Wellenlänge auf der aktuellen Umgebungsbetriebsbedingung und dem Vorcharakterisieren für jede der Wellenlängenspitzen des optischen Referenzelements (410) basieren.

15. Verfahren nach einem der Ansprüche 10 bis 14, wobei der erste Teil des wellenlängengefegten Lichts eine höhere optische Intensität hat als der zweite Teil.

## Revendications

1. Système de mesure optique de longueur d'onde (400), comprenant :
une source optique (402) pour produire de la lumière balayée dans une gamme de longueurs d'onde,
un ou plusieurs éléments de détection optique (112), chacun des éléments de détection optique ayant une longueur d'onde caractéristique dans la gamme des longueurs d'onde,
un élément de référence optique (410) conçu pour produire une pluralité de pics de longueur d'onde (302) répartis dans au moins une partie de la gamme de longueurs d'onde, chacun des pics de longueurs d'onde étant pré-caractérisé pour une longueur d'onde absolue dans une plage de conditions de fonctionnement environnementales pour l'élément de référence optique,
un capteur de détection (114) permettant de convertir la lumière reçue des éléments de détection optique (112) en un signal électrique de capteur,
un capteur de référence (120) permettant de convertir la lumière reçue de l'élément de référence optique (410) en un signal électrique de référence, et
un système de traitement (122) conçu pour déterminer la une ou plusieurs longueurs d'onde caractéristiques des éléments de détection optique (112) en fonction du signal électrique de capteur, du signal électrique de référence et d'une condition de fonctionnement environnementale instantanée dans ladite plage de conditions de fonctionnement environnementales.

2. Système selon la revendication 1, dans lequel :
l'élément de référence optique (410) comprend un réseau de Bragg superstructuré (200),
le réseau de Bragg superstructuré comprend un guide d'ondes optique à grand diamètre comportant une gaine (204) entourant un coeur (202),
le diamètre extérieur de la gaine est d'au moins 0,3 mm, et
le guide d'ondes optique à grand diamètre est monté à seulement une extrémité de telle sorte que le guide d'ondes optique à grand diamètre est exempt de tension.

3. Système selon la revendication 1 ou 2, dans lequel la pluralité des pics de longueur d'onde (302) sont répartis uniformément sur la au moins une partie de la gamme de longueurs d'onde.

4. Système selon la revendication 1, 2 ou 3, dans lequel les éléments de détection optique (112) ont des longueurs d'onde caractéristiques inclues dans un sous-ensemble de la gamme de longueurs d'onde et l'élément de référence optique (410) est conçu pour produire la pluralité des pics de longueur d'onde répartis sur au moins le sous-ensemble de la gamme des longueurs d'onde.

5. Système selon la revendication 1, 2 ou 3, dans lequel l'élément de référence optique (410) est conçu pour produire la pluralité des pics de longueur d'onde (302) répartis dans la gamme de longueurs d'onde.

6. Système selon l'une quelconque des revendications précédentes, dans lequel le système de traitement (122) est conçu pour déterminer la longueur d'onde caractéristique pour l'un des éléments de détection optique (112) en :
déterminant un temps relatif d'un pic de capteur dans le signal électrique de capteur correspondant à l'un des éléments de détection optique,
déterminant un temps relatif d'un premier pic de référence produit dans le signal électrique de référence avant le pic de capteur,
déterminant un temps relatif d'un second pic de référence produit dans le signal électrique de référence après le pic de capteur,
déterminant une première longueur d'onde absolue correspondant au premier pic de longueur d'onde,
déterminant une seconde longueur d'onde absolue correspondant au second pic de longueur d'onde, et
calculant la longueur d'onde caractéristique pour l'un des éléments de détection optique en fonction de la première longueur d'onde absolue, de la seconde longueur d'onde absolue et du temps relatif du pic de capteur par rapport à au moins l'un des premier et second pics de référence.

7. Système selon la revendication 6, comprenant en outre un capteur d'environnement conçu pour déterminer la condition de fonctionnement environnementale instantanée, et dans lequel le système de traitement (122) est conçu pour déterminer les première et seconde longueurs d'onde absolues en fonction de la condition de fonctionnement environnementale instantanée et de la pré-caractérisation de chacun des pics de longueur d'onde (402) de l'élément de référence optique (410).

8. Système selon l'une quelconque des revendications précédentes, comprenant en outre :
un séparateur optique (404) pour diviser la lumière balayée en longueur d'onde en une première partie et une seconde partie, la première partie ayant une intensité optique supérieure à la seconde partie,
un premier circulateur optique (406) conçu pour envoyer la première partie de la lumière balayée en longueurs d'onde aux éléments de détection optique, et
un second circulateur optique (408) conçu pour envoyer la seconde partie de la lumière balayée en longueurs d'onde à l'élément de référence optique (410), le premier circulateur optique (404) étant conçu en outre pour envoyer la lumière reçue des éléments de détection optique (112) vers le capteur de détection (114) et le second circulateur optique étant conçu en outre pour envoyer la lumière reçue de l'élément de référence optique vers le capteur de référence (120).

9. Système selon l'une quelconque des revendications précédentes, dans lequel la au moins une partie de la gamme de longueurs d'onde comprend les longueurs d'onde comprises entre 1524 nm et 1572 nm.

10. Procédé pour déterminer des longueurs d'onde caractéristiques d'un ou plusieurs éléments de détection optique (112), comprenant les opérations consistant à :
balayer (502) de la lumière dans une gamme de longueurs d'onde,
introduire (504) une première partie de la lumière balayée en longueurs d'onde vers les éléments de détection optique, chacun des éléments de détection optique ayant une longueur d'onde caractéristique dans la gamme des longueurs d'onde,
introduire (506) une seconde partie de la lumière balayée en longueurs d'onde vers un élément de référence optique (410) pour produire une pluralité de pics de longueur d'onde (302) répartis sur au moins une partie de la gamme de longueurs d'onde, chacun des pics de longueur d'onde étant pré-caractérisé pour une longueur d'onde absolue dans une plage de conditions de fonctionnement environnementales pour l'élément de référence optique,
convertir (508) la lumière reçue des éléments de détection optique en un signal électrique de capteur,
convertir (510) la lumière reçue de l'élément de référence optique en un signal électrique de référence, et
déterminer (512) la une ou plusieurs longueurs d'onde caractéristiques des éléments de détection optique en fonction du signal électrique de capteur, du signal électrique de référence et d'une condition de fonctionnement environnementale instantanée incluse dans ladite plage de conditions de fonctionnement environnementales.

11. Procédé selon la revendication 10, dans lequel :
l'élément de référence optique (410) comprend un réseau de Bragg super-structuré (200),
le réseau de Bragg super-structuré comprend un guide d'ondes de grand diamètre comportant une gaine (204) entourant un coeur (202), et
le diamètre extérieur de la gaine est d'au moins 0,3 mm.

12. Procédé selon la revendication 10 ou 11, dans lequel les longueurs d'onde caractéristiques des éléments de détection optique sont inclues dans un sous-ensemble de la gamme de longueurs d'onde et l'élément de référence optique (410) est conçu pour produire la pluralité des pics de longueur d'onde (302) répartis sur au moins le sous-ensemble de la gamme de longueurs d'onde.

13. Procédé selon la revendication 10 ou 11, dans lequel l'élément de référence optique (410) est conçu pour produire la pluralité de pics de longueur d'onde (302) répartis dans la gamme de longueurs d'onde.

14. Procédé selon l'une quelconque des revendications 10 à 13, dans lequel la détermination des longueurs d'onde caractéristiques pour les éléments de détection optique (112) comprend la détermination d'une longueur d'onde caractéristique pour l'un des éléments de détection optique effectuée en :
déterminant un temps relatif d'un pic de capteur dans le signal électrique de capteur correspondant à l'un des éléments de détection optique,
déterminant un temps relatif d'un premier pic de référence produit dans le signal électrique de référence avant le pic de capteur,
déterminant un temps relatif d'un second pic de référence produit dans le signal électrique de référence après le pic de capteur,
déterminant une première longueur d'onde absolue correspondant au premier pic de longueur d'onde,
déterminant une seconde longueur d'onde absolue correspondant au second pic de longueur d'onde,
calculant la longueur d'onde caractéristique pour l'un des éléments de détection optique en fonction de la première longueur d'onde absolue, de la seconde longueur d'onde absolue et du temps relatif du pic de capteur par rapport à au moins l'un des premier et second pics de référence, et
déterminant la condition de fonctionnement environnementale instantanée, la détermination de la première longueur d'onde absolue et de la seconde longueur d'onde absolue étant basées sur la condition de fonctionnement environnementale instantanée et la pré-caractérisation pour chacun des pics de longueur d'onde de l'élément de référence optique (410).

15. Procédé selon l'une quelconque des revendications 10 à 14, dans lequel la première partie de la lumière balayée en longueurs d'onde a une intensité optique supérieure à la seconde partie.
